# EUROPEAN PATENT APPLICATION

(11) **EP 2 631 854 A1**
(43) Date of publication of application: **28.08.2013**
(21) Application number: 13156270.4
(22) Date of filing: 22.02.2013
(51) Int. Cl.: G06Q 10/06, G06Q 40/02

(54) **System for debt collection workflow administration**

(30) Priority: 23.02.2012 IN MU03872012
(71) Applicant: Tata Consultancy Services Limited, 400021 Mumbay (IN)
(72) Inventor: Mani, Jayasekar, 600045 Chennai (IN); Singh, Rajesh Ramnath, 400063 Mumbai (IN)
(74) Representative: Manitz, Finsterwald & Partner GbR

(57) **Abstract**

A method and a system for debt collection workflow administration for a financial institution are disclosed. The method comprises defining a debt collection workflow for a set of stakeholders each having one or more hierarchy levels. The debt collection workflow defines a plurality of functions to be performed at the one or more hierarchy levels of each stakeholder of the set of stakeholders. Further, the debt collection workflow is based in part on regulatory requirements. The method further comprises administering the one or more hierarchy levels. The administering comprises generating statistic cards comprising debtors' information. The administering further comprises encrypting the statistic cards and providing selective access of the statistic cards to the one or more hierarchy levels of each stakeholder of the set of stakeholders based upon access privileges assigned to the one or more hierarchy levels.

## Description

### TECHNICAL FIELD

The present subject matter described herein, in general, relates to debt collection, and more particularly to debt collection workflow administration for a financial institution.

### BACKGROUND

Financial institutions, such as banks, stock brokering companies, and other banking and non-banking financial institutions are in the business of crediting loan to customers or debtors. Therefore, these financial institutions have a huge amount of money being credited to the debtors. A lot of the debtors are unable to pay back the debt to the financial institutions due to one or more reasons. As a result, these financial institutions incur huge revenue losses.

The financial institutions have understood that profitability can be maintained only by recovering debts from the debtors in a timely manner. In order to recover the debts, the financial institutions may engage outside agencies, such as telecalling agencies and collection vendors. The telecalling agencies call and pursue the debtors to payback the debt to the financial institutions. Similarly, collection vendors may employ field agents for personal collection of the debt from the field.

The financial institutions need to closely monitor the operations of such outside agencies for the debt collection process to be effective.

### SUMMARY

This summary is provided to introduce concepts related to systems and methods for administering debt collection for a financial institute and the concepts are further described below in the detailed description. This summary is not intended to identify essential features of the claimed subject matter nor is it intended for use in determining or limiting the scope of the claimed subject matter.

In one implementation, a method for debt collection workflow administration for a financial institution is provided. The method comprises defining a debt collection workflow for a set of stakeholders each having one or more hierarchy levels. The debt collection workflow defines a plurality of functions to be performed at the one or more hierarchy levels of each stakeholder of the set of stakeholders. Further, the debt collection workflow is based in part on regulatory requirements. The method further comprises administering the one or more hierarchy levels. The administering comprises generating statistic cards comprising debtors' information. The administering further comprises encrypting the statistic cards and providing selective access of the statistic cards to the one or more hierarchy levels of each stakeholder of the set of stakeholders based upon access privileges assigned to the one or more hierarchy levels.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Figure 1 illustrates a network implementation of a Debt Collection Administration System (DCAS) system for debt collection workflow administration for a financial institution is shown, in accordance with an embodiment of the present subject matter.

Figure 2 shows a flowchart illustrating a method managing debt collection, in accordance with an embodiment of the present subject matter.

### DETAILED DESCRIPTION

Systems and methods for managing end to end process of debt collection for a financial institution are described. Examples of financial institution may include banks, insurance companies, stock brokering companies, and other banking and non-banking financial institutions. These financial institutions are in the business of giving loans or credits to debtors/customers in order to earn profits from interests paid by such debtors on the loan. However, due to various reasons, a lot of debtors end up not paying back the loaned amount or installments of the loaned amount to the financial institutions, thereby resulting in bad debts. As the number of bad debts increases, these financial institutions suffer huge losses. Therefore, the financial institutions have understood that profitability can be maintained only by managing debt collection effectively.

Conventionally, the financial institutions engage services of outside agencies, such as telecalling agencies and collection vendors. The outside agencies employ a group of individuals working as telecallers or field collecting agents who are assigned the task of following up with delinquent customers for the purposes of collection of the amount due. This approach allows the financial institutes to focus on their core business and the cumbersome task of following and collection is shifted to outside agencies. However, at the same time, the financial institutions often face various issues by engaging these outside agencies.

For example, for the purpose collection, the financial institutions provide the details of the delinquent customers to the outside agencies. These details are often private and confidential details of the customers and the onus of safeguarding the same lies with the financial institute. If the outside agencies are not scrutinized properly, they may misuse these details resulting not only in loss of business for the financial institutions but other damages like penalties that the financial institutions may have to pay to customers who may sue the financial institutions for breach of confidentiality.

Further, different outside agencies follow different work practices leading to confusion and mismanagement. For example, different telecalling agencies may follow different processes for telecalling. For example, a few telecalling agencies may have their own customized software for telecalling. Others may use MS-Excel based dumps for manual calling or may use a dialer setup to call the debtors. Since different outside agencies follow their own processes for debt collection, inputs from the outside agencies to the financial institutions are difficult to collate, analyze, and integrate to get an overall view of productivity of outside agencies. Further, the processes used by such outside agencies may be inefficient, non-complaint to government regulations and unsecured, thereby creating issues, such as penalties, law suits, delays, inaccuracies, high risk of fraud in cash collections, debtor dissonance, and the like, for the financial institution.

For example, the financial institutions may not have transparency regarding the operation of the outside agencies. For instance, the outside agencies may not always report the correct details of the collections made. In addition, as mentioned above, the outside agencies employ various methodologies for collection. If the outside agencies, who are agents of the financial institutions, violate governmental or statutory provisions, the financial institutions may, as their principal, be held responsible. The financial institutions are often unable to monitor the operation of the outside agencies resulting in an inefficient debt collection process.

In order to effectively manage each and every aspect of debt collection along with a set of stakeholders, for example, the outside agencies, associated with debt collection, methods and systems are provided by the present subject matter. In one implementation, the methods and the systems define a debt collection workflow. The debt collection workflow defines step by step functionality of every stakeholder associated with debt collection such that the debt collection workflow is uniformly followed by every stakeholder without deviation. For example, the debt collection workflow may define steps to be performed by each stakeholder, such as the financial institution, a telecalling agency employed by the financial institution for making calls to the debtors, collection vendors for collecting the debt from the debtors personally, and an Information Technology (IT) service provider which is maintaining the overall system and the method. The debt collection workflow provides the financial institution visibility of the overall debt collection.

In accordance with one embodiment of the subject matter, the debt collection workflow provides methodology to be followed by all the stakeholders so that a standardized way of debt collection may be evolved, thereby facilitating the financial institution in analyzing and strategizing debt collection. For example, the debt collection workflow outlines method and equipments to be used by the stakeholders for performing the steps, thereby standardizing the debt collection workflow. In one embodiment, the debt collection workflow is defined in accordance with various governmental or statutory provisions. Thus, the financial institution may be assured that the stakeholders do not violate the provisions.

While aspects of described system and method for comprehensive management of debt collection may be implemented in any number of different computing systems, environments, and/or configurations, the embodiments are described in the context of the following exemplary system.

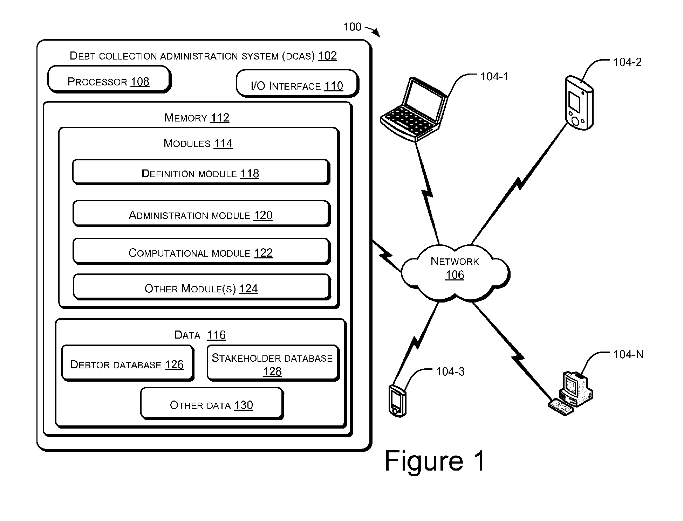

Referring now to Figure 1, a network implementation 100 of a Debt Collection Administration System (DCAS) 102 for debt collection workflow administration is illustrated, in accordance with an embodiment of the present subject matter. In one embodiment, the DCAS 102 provides for comprehensive management of debt collection and associated stakeholders. The DCAS 102 may be used by a financial institution, such as a bank, a stock brokering company, and other banking and non-banking companies which provide loan or credit to customers/debtors. The DCAS 102 may be used to manage collection of debt from debtors who are unable to pay back the loaned amount to the financial institution. In order to recover the loaned amount back from the debtors, a set of stakeholders may be involved in debt collection. The set of stakeholders may include the financial institution, an Information Technology (IT) service provider, and outside agencies, such as telephone calling agencies and collection vendors. In one embodiment, the DCAS 102 may be hosted in a server of the IT service provider for security purposes; however, in another embodiment, the DCAS 102 may be hosted anywhere else as mentioned above.

In order to avoid the problems associated with the conventional debt collection methods described above, the DCAS 102 provides a debt collection workflow. The DCAS 102 may be used by a financial institute to efficiently monitor the debt collection process.

The DCAS 102 may be implemented in a variety of computing systems, such as a laptop computer, a desktop computer, a notebook, a workstation, a mainframe computer, a server, a network server, and the like. It will be understood that the DCAS 102 may be accessed by stakeholders through one or more client devices 104-1, 104-2,...104-N, collectively referred to as client devices 104 hereinafter, or applications residing on client devices 104. Examples of the client devices 104 may include, but are not limited to, a portable computer, a personal digital assistant, a handheld device, and a workstation. The client devices 104 are communicatively coupled to the DCAS 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

In one embodiment, the DCAS 102 may include at least one processor 108, an I/O interface 110, and a memory 112. The at least one processor 108 may be implemented as one or more microprocessors, microcomputers, microcontrollers, digital signal processors, central processing units, state machines, logic circuitries, and/or any devices that manipulate signals based on operational instructions. Among other capabilities, the at least one processor 108 is configured to fetch and execute computer-readable instructions stored in the memory 112.

The I/O interface 110 may include a variety of software and hardware interfaces, for example, a web interface, a graphical user interface, and the like. The I/O interface 110 may allow the DCAS 102 to interact with a user directly or through the client devices 104. Further, the I/O interface 110 may enable the DCAS 102 to communicate with other computing devices, such as web servers and external data servers (not shown). The I/O interface 110 can facilitate multiple communications within a wide variety of networks and protocol types, including wired networks, for example, LAN, cable, etc., and wireless networks, such as WLAN, cellular, or satellite. The I/O interface 110 may include one or more ports for connecting a number of devices to one another or to another server.

The memory 112 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 112 may include modules 114 and data 116.

The modules 114 include routines, programs, objects, components, data structures, etc., which perform particular tasks or implement particular abstract data types. In one implementation, the modules 114 may include a definition module 118, an administration module 120, a computational module 122, and other modules 124. The other modules 124 may include programs or coded instructions that supplement applications and functions of the DCAS 102.

The data 116, amongst other things, serves as a repository for storing data processed, received, and generated by one or more of the modules 114. The data 116 may also include a debtor database 126, a stakeholder database 128, and other data 130. The stakeholder database 128 may store details of each stakeholder of the set of stakeholders. In an implementation, the details may include at least one of Service Level Agreement (SLA) among the set of stakeholders, address, mail ids, telephone numbers of employees of each stakeholder of the set of stakeholders, and service tax numbers of the set of stakeholders. The other data 130 may include data generated as a result of the execution of one or more modules in the other module 124.

In one implementation, the definition module 118 may define the debt collection workflow for each stakeholder of the set of stakeholders mentioned above. Each stakeholder of the set of stakeholders has one or more hierarchy levels. For example, the outside agencies have one or more hierarchy levels, such as team member, team leader, assistance manager, manager, and the like. Individuals at each of the hierarchy levels of each stakeholder of the set of stakeholders perform a plurality of functions. These plurality of functions are defined by the debt collection workflow, for example, by defining role based login profiles for the different hierarchy levels. Therefore, it may be understood that the debt collection workflow defines step wise step functions to be performed at each hierarchy level of each stakeholder.

In one example, as per the debt collection workflow defined by the definition module 118, the financial institution, at first may employ the telecalling agencies to recover the debt. The telecalling agencies may call and pursue the debtors to pay back the debt. As per the debt collection workflow, the team members in a telecalling agency may be assigned the function of calling the debtors to pursue them to pay back. Further, the debt collection workflow may require the team leaders in the telecalling agencies to monitor and listen to the calls made by the team members for purposes, such as training, monitoring, and assessing the performance of the team members. Similarly, the debt collection process may define other functions of the team leaders. Accordingly, it may be understood that the debt collection workflow provides functions for all individuals at each hierarchy level of each of the stakeholders.

Apart from defining the functions for the stakeholders, the debt collection workflow also outlines ways and equipments to be used to perform said functions. For example, the debt collection workflow may require a centralized login by the telecalling agencies and may provide a standard dialer support to all telecalling agencies to standardize an output from all the telecalling agencies. The standard dialer support may be used to scrub phone numbers used by the telecalling agencies for calling the debtors. Scrubbing the phone numbers may include prefixing a Subscriber Trunk Dialing (STD) code in a phone number of a debtor based on a geographical location of the debtor. Since all telecalling agencies may use the same debt collection workflow and same equipments for telecalling, an output from all telecalling agencies may be collated easily as the output generated by all the telecalling agencies will be in the same format.

Similarly, the debt collection workflow may define functions of other stakeholders, such as the collection vendors, the financial institution, and the IT service provider. In one implementation, the definition module 118 also defines training modules and leave tracking mechanisms for individuals at the one or more hierarchy levels. Further, the debt collection workflow also includes generating reminders at predefined intervals for the functions to be performed by individuals at each hierarchy level of each stakeholder. Further, the debt collection workflow includes generating log of the functions performed at each hierarchy level of each stakeholder.

In one implementation, the debt collection workflow may be based in part on regulatory requirements, such as governmental regulatory requirements. For example, the Reserve Bank of India (RBI) has given certain directions to the financial institutions, the collection vendors, and the telecalling agencies for debt collection. These directions must be adhered to by the stakeholders to avoid penalties and law suits. Therefore, the functions charted out by the debt collection workflow for the stakeholders may conform to the governmental regulatory requirements. For example, the RBI directs the telecalling agencies to make calls to the debtors only between 7 am to 7 pm. In order to make the stakeholders comply with the governmental regulatory requirements, the debt collection workflow is accessible on the interface to the stakeholders only between 7am to 7pm. In one embodiment, administration module 120 may disable the debt collection workflow from the stakeholders before 7am and after 7 pm. For example, the dialer support may be unavailable to all telecalling agencies for the specified time period.

In one implementation, the telecallers may be provided with statistic cards to call the debtors. The statistic cards comprise debtor's information, such as name, address, phone number, amount loaned, period of non payment, and other relevant detail about the debtor. The statistic cards may be used by the telecalling agencies to contact the debtors and recover the debt. The statistic cards are selectively displayed to telecallers based upon access privileges assigned to one or more hierarchy levels of telecallers. For example, an employee X of a telecalling agency A may get access to only those statistic cards which the employee X is responsible for. Similarly, an employee Y of a tele caller agency B may get access to only those statistic cards which the employee Y is responsible for. Therefore, the statistic cards are displayed selectively displayed to the stakeholders, such as the telecalling agencies. Further, the statistic cards may be displayed only between 7 am to 7 pm as per the regulatory requirements.

Further, in the process of telecalling, some debtors may agree to payback the debt, however, others may refuse to payback or answer their phones. Information of the debtors who refuse to payback or answer their phones, in one embodiment, may be sent to the collection vendors who go to the field for debt collection. As explained in context of the telecaller agencies, the collections vendors too have roles relating to the different hierarchical levels in their organization and the debt collection workflow is such that functions of each of these hierarchical levels are defined, and in one implementation, are defined in compliance with the regulatory requirements.

According to the debt collection workflow defined by the definition module 118, another set of statistic cards, containing information of such debtors, are provided to the collection vendors. It may be understood that the statistic cards are selectively displayed to the collection vendors based upon access privileges assigned to one or more hierarchy levels of the collection vendors. Further, the statistic cards may be displayed only between 7 am to 7 pm as per the regulatory requirements.

Further, in one implementation, the debt collection workflow also defines eligibility criteria of individuals at each hierarchy level of each stakeholder. For example, the debt collection workflow may require field collection agents associated with the collection vendors to qualify an exam designed by an authority, for example, the RBI before the field collections agents may be assigned the task of debt collection. Similarly, the debt collection workflow may require the individuals at various hierarchy levels, such as team members, team leaders, managers to have certain qualifications before they could enroll with the DCAS at the said hierarchy levels.

Further, in the present implementation, the administration module 120 may be used to administer the collection vendors. The collection vendors may employ field collection agents who personally go to the field for debt collection. The field collection agents may carry a field collection device capable of accessing the DCAS 102 via the network 106. The field collection device may send login details to the administration module 120 to access the DCAS. The administration module 120 may authenticate the field collection device based upon the login details. Subsequently, the administration module 120 may track the field collection agent, for example, based upon a Global Positioning System (GPS) device incorporated within the field collection device. Similarly, the administration module 120 may manage other stakeholders, such as the telecalling agencies, the financial institution, and the IT service provider.

In one implementation, the statistic cards described above may also be generated by the administration module 120 and are stored in the debtor database. Further, the outside agencies, such as the telecalling agencies and the collection vendors may have read only access to the statistic cards. Furthermore, the statistic cards may be encrypted by the administration module 120 in order to secure debtors' information. Furthermore, the statistic cards are provided by the administration module 120 to the one or more hierarchy levels. The statistic cards may be accessed by the outside agencies only after the outside agencies are authenticated.

In the present implementation, the stakeholders may be authenticated by the administration module 120 before providing access to the debt collection workflow and the statistic cards. The stakeholders may be authenticated using at least one of an Internet Protocol (IP) level authentication, network level authentication, registered gateways, and user login based authentication.

Further, each of the individuals at various hierarchy levels of each stakeholder needs to be administered or managed. In order to administer each hierarchy level of each stakeholder, the administration module 120 may be used. In one example, administering the stakeholders may comprise assessing performance of the stakeholders. In order to do so, the administration module 120 may receive a debt collection report from individuals at each of the hierarchy levels of each stakeholder. The debt collection report is indicative of the debt collected by the outside agencies, such as telecalling agencies and the collection vendors. For example, all the debt collected by calling the debtors by the telecalling agencies may be reported in the debt collection reports, which may be sent to the administration module 120. Similarly, all the debt collected by the field collection agents by physically going to the field may also be reported in the debt collection reports, which may be sent to the administration module 120. The administration module 120 may collate all such debt collection reports to view productivity of the telecalling agencies and the collection vendors.

Apart from receiving the debt collection reports from the stakeholders, the administration module 120 may also receive a conformance parameter from the stakeholders. The conformance parameter is indicative of conformance of the stakeholders with the debt collection workflow. For example, the conformance parameter may indicate whether the stakeholders are following the debt collection workflow or not. For example, the field collection agents must report the collection to the DCAS 102 within a stipulated time period. Failing to do so may reflect in the conformance parameter associated with such field collection agents. In one implementation, the conformance parameter is generated by the definition module 118 based upon the conformance of the stakeholders with the debt collection workflow.

Further, based upon the debt collection report and the conformance parameter received for each hierarchy level, the administration module 120 may generate performance analytical reports. The performance analytical reports are indicative of performance of the stakeholders at each hierarchy level. The performance analytical reports may be represented in form of graphs and pie charts to interpret a trend in performance of the individuals at various hierarchy levels. In one implementation, the administration module 120 may selectively display the performance analytical reports to the stakeholders based upon access privileges assigned to each hierarchy level of each stakeholder. For example, the performance analytical reports for the team member of a telecalling agency may be viewed by the team leader of the telecalling agency because the team leader may have the access privilege to view the performance analytical reports of the team members. Similarly, the performance analytical reports of a manager of the telecalling agency may be viewed by a supervisor in the financial institution.

In one implementation, the performance analytical reports may be generated periodically by the administration module 120. Further, it may be understood that several performance analytical reports of various hierarchy levels may be collated by the administration module 120. Subsequently, the administration module 120 may consolidate the collated performance analytical reports to provide a holistic view of performance of the stakeholders in debt collection and conformance of the stakeholders to the debt collection workflow.

In one implementation, the performance analytical report for each individual at each hierarchy of each stakeholder may contribute in calculating an incentive for each individual. The incentive may be calculated by the computational module 122. In one example, the computational module 122 may calculate an incentive of employee X of a collection vendor based upon certain factors, such as a corresponding performance analytical report of the employee X, predefined targets of the employee X, and weightages assigned to the functions to be performed by employee X. In the present example, the employee X may have exceeded the predefined targets assigned to the employee X but may not have completely conformed to the debt collection workflow. Further, the employee X may have high weightages assigned for the functions to be performed by him. Based upon these factors, the incentive of employee X may be calculated by the computational module 122 automatically.

In one implementation, the computational module 122 may also calculate an attrition rate at each hierarchy level of each stakeholder of the set of stakeholders. The attrition rate may be selectively displayed to the set of stakeholders based upon access privileges assigned to stakeholders. For example, a team leader in a telecalling agency may be able to view an attrition rate of the team members. Similarly, a project manager of the IT service provider may be able to view attrition rate at all hierarchy levels across all stakeholders.

Therefore, it may be understood that the DCAS 102 may be used for comprehensive management and administration of debt collection and associated stakeholders. The DCAS 102, not only enables the outside agencies to work in an standardized manner and monitor their employees, but also provides the financial institution visibility of the complete debt collection process. Further, the financial institution can scrutinize the outside agencies to ensure abidance with the regulatory requirements.

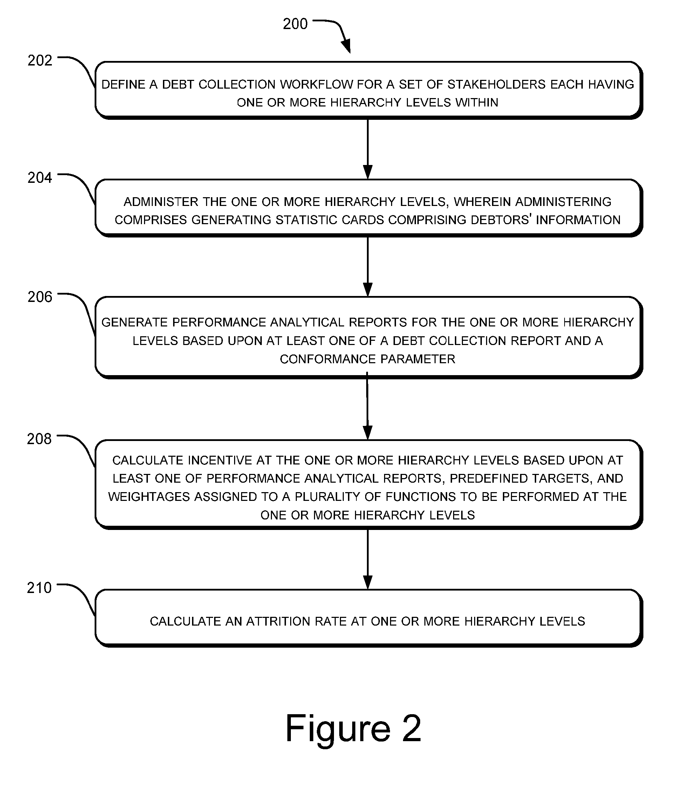

Referring now to Figure 2, a method 200 for debt collection workflow administration for a financial institution is shown, in accordance with an embodiment of the present subject matter. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communications network. In a distributed computing environment, computer executable instructions may be located in both local and remote computer storage media, including memory storage devices.

The order in which the method 200 is described is not intended to be construed as a limitation, and any number of the described method blocks can be combined in any order to implement the method 200 or alternate methods. Additionally, individual blocks may be deleted from the method 200 without departing from the spirit and scope of the subject matter described herein. Furthermore, the method can be implemented in any suitable hardware, software, firmware, or combination thereof. However, for ease of explanation, in the embodiments described below, the method 200 may be considered to be implemented in the above described DCAS 102.

At block 202, a debt collection workflow is defined for a set of stakeholders, each having one or more hierarchy levels. The debt collection workflow defines a plurality of functions to be performed at the one or more hierarchy levels of each stakeholder of the set of stakeholders. Further, the debt collection workflow is based in part on regulatory requirements, for example, governmental regulatory requirements. In one implementation, the debt collection workflow may be defined by the definition module 118.

At block 204, the one or more hierarchy levels are administered. In one implementation, the administering may include generating statistic cards comprising debtors' information. The statistic cards are encrypted and selectively accessible at the one or more hierarchy levels of each stakeholder of the set of stakeholders based upon access privileges assigned to the one or more hierarchy levels. In one example, the statistic cards are generated, encrypted, and provided by the administration module 120.

At block 206, performance analytical reports are generated for the one or more hierarchy levels. The performance analytical reports may be generated based upon at least one of a debt collection report and a conformance parameter. The performance analytical reports are indicative of performance at the one or more hierarchy levels. Further the performance analytical reports are selectively displayed to the set of stakeholders based upon access privileges assigned to the one or more hierarchy levels. In one implementation, the performance analytical reports are generated by the administration module 120.

At block 208, incentive for the one or more hierarchy levels may be calculated based upon at least one of performance analytical reports, predefined targets, and weightages assigned to the plurality of functions to be performed at the one or more hierarchy levels. In one implementation, the incentive may be calculated by the computational module 122.

Although implementations for methods and systems for managing debt collection for a financial institution have been described in language specific to structural features and/or methods, it is to be understood that the appended claims are not necessarily limited to the specific features or methods described. Rather, the specific features and methods are disclosed as examples of implementations for managing debt collection.

## Claims

1. A computer implemented method for debt collection workflow administration for a financial institution, the method comprising:
defining a debt collection workflow for a set of stakeholders each having one or more hierarchy levels, wherein the debt collection workflow defines a plurality of functions to be performed at the one or more hierarchy levels of each stakeholder of the set of stakeholders, and wherein the debt collection workflow is based in part on governmental regulatory requirements; and
administering the one or more hierarchy levels, wherein the administering comprises generating statistic cards comprising debtors' information, wherein the administering further comprises
encrypting the statistic cards; and
providing selective access of the statistic cards to the one or more hierarchy levels of each stakeholder of the set of stakeholders based upon access privileges assigned to the one or more hierarchy levels.

2. The method of claim 1, wherein the administering further comprises authenticating the set of stakeholders for providing access to the debt collection workflow and the statistic cards, wherein the authentication is at least one of an Internet Protocol (IP) level authentication, network level authentication, authentication through registered gateways, and user login based authentication.

3. The method of claim 1, wherein the administering further comprises:
receiving a debt collection report and a conformance parameter, wherein the debt collection report is indicative of the debt collected and the conformance parameter is indicative of conformance of the stakeholders with the debt collection workflow;
generating performance analytical reports for the one or more hierarchy levels based upon at least one of the debt collection report and the conformance parameter, wherein the performance analytical reports are indicative of performance at the one or more hierarchy levels; and
selectively displaying the performance analytical reports to the set of stakeholders based upon access privileges assigned to the one or more hierarchy levels.

4. The method of claim 3, wherein the administering further comprises
collating the performance analytical reports for the one or more hierarchy levels; and
consolidating the collated performance analytical reports to provide a holistic view of performance of the stakeholders.

5. The method of claim 3, further comprising calculating incentive at the one or more hierarchy levels based upon at least one of performance analytical reports, predefined targets, and weightages assigned to the plurality of functions to be performed at the one or more hierarchy levels.

6. The method of claim 1, wherein the administering further comprises
receiving login details from a field collection device associated with a field collection agent;
authenticating the field collection device for debt collection based upon the login details; and
tracking the field collection agent and the debt collected using the field collection device.

7. The method of claim 1, further comprising calculating an attrition rate at one or more hierarchy levels, wherein the attrition rate is selectively displayed to the set of stakeholders based upon access privileges assigned to one or more hierarchy levels.

8. The method of claim 1, wherein the debt collection workflow further comprises
generating reminders at predefined intervals for the functions to be performed by at one or more hierarchy levels; and
generating log of the functions performed at the one or more hierarchy levels.

9. The method of claim 1, wherein the debt collection workflow further defines eligibility criteria at the one or more hierarchy levels, and wherein the set of stakeholders is authenticated based on the eligibility criteria.

10. The method of claim 1, wherein the debt collection workflow comprises scrubbing phone numbers used by telephone calling agencies for calling debtors, wherein the scrubbing comprises prefixing a Subscriber Trunk Dialing (STD) code in a phone number of a debtor based on a geographical location of the debtor.

11. A Debt Collection Administration System (DCAS) (102) for a financial institution, the DCAS (102) comprising:
a processor (108); and
a memory (112) coupled to the processor (108), wherein the memory (112) comprises:
a definition module (118) for defining a debt collection workflow for a set of stakeholders each having one or more hierarchy levels, wherein the debt collection workflow defines a plurality of functions to be performed at the one or more hierarchy levels of each stakeholder of the set of stakeholders, and wherein the debt collection workflow is based in part on regulatory requirements; and
an administration module (120) for administering the one or more hierarchy levels, wherein the administration module is further configured to generate statistic cards comprising debtors' information, wherein the administration module is further configured to encrypt the statistic cards; and
provide selective access of the statistic cards to the one or more hierarchy levels of each stakeholder of the set of stakeholders based upon access privileges assigned to the one or more hierarchy levels.

12. The DCAS (102) of claim 11, wherein the administration module (120) is further configured to:
receive a debt collection report and a conformance parameter, wherein the debt collection report is indicative of the debt collected and the conformance parameter is indicative of conformance of the stakeholders with the debt collection workflow;
generate performance analytical reports for the one or more hierarchy levels based upon at least one of the debt collection report and the conformance parameter, wherein the performance analytical reports are indicative of performance at the one or more hierarchy levels, and
selectively display the performance analytical reports to the set of stakeholders based upon access privileges assigned to the one or more hierarchy levels.

13. The DCAS (102) of claim 11, wherein the administration module (120) is further configured to:
receive login details from a field collection device associated with a field collection agent;
authenticate the field collection device for debt collection based upon the login details;
track the field collection device; and
receive debt collection details from the field collection device, wherein the debt collection details is indicative of amount collected from the debtors.

14. The DCAS (102) of claim 13, further comprising a computational module (122) configured to:
calculate incentive at the one or more hierarchy levels based upon at least one of performance analytical reports, predefined targets, and weightages assigned to the plurality of functions to be performed at the one or more hierarchy levels; and
calculate an attrition rate at one or more hierarchy levels, wherein the attrition rate is selectively displayed to the set of stakeholders based upon access privileges assigned to one or more hierarchy levels.

15. A computer-readable medium having embodied thereon a computer program for executing a method for debt collection workflow administration for a financial institution, the method comprising:
defining a debt collection workflow for a set of stakeholders each having one or more hierarchy levels, wherein the debt collection workflow defines a plurality of functions to be performed at the one or more hierarchy levels of each stakeholder of the set of stakeholders, and wherein the debt collection workflow is based in part on governmental regulatory requirements; and
administering the one or more hierarchy levels, wherein the administering comprises generating statistic cards comprising debtors' information, wherein the administering further comprises
encrypting the statistic cards; and
providing selective access of the statistic cards to the one or more hierarchy levels of each stakeholder of the set of stakeholders based upon access privileges assigned to the one or more hierarchy levels.
